(19) Europäisches Patentamt
European Patent Office
Office européen des brevets

(11) **EP 3 510 420 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **17761028.4**

(22) Anmeldetag: **16.08.2017**

(51) Internationale Patentklassifikation (IPC):
**G01S 13/931** *(2020.01)*   **G01S 17/931** *(2020.01)*

(52) Gemeinsame Patentklassifikation (CPC):
**G01S 13/931; G01S 17/931;** G01S 2013/9315; G01S 2013/9317; G01S 2013/932; G01S 2013/9323; G01S 2013/93271; G01S 2013/93272

(86) Internationale Anmeldenummer:
**PCT/EP2017/070770**

(87) Internationale Veröffentlichungsnummer:
**WO 2018/046266 (15.03.2018 Gazette 2018/11)**

(54) **VORRICHTUNG ZUM WARNEN EINES FAHRZEUGFÜHRERS EINES FAHRZEUGS VOR EINEM OBJEKT SOWIE FAHRZEUG MIT EINER SOLCHEN VORRICHTUNG**

DEVICE FOR WARNING A VEHICLE DRIVER OF A VEHICLE ABOUT AN OBJECT, AND VEHICLE HAVING SUCH A DEVICE

DISPOSITIF POUR AVERTIR LE CONDUCTEUR D'UN VÉHICULE DE LA PRÉSENCE D'UN OBJET IMMOBILE AINSI QUE VÉHICULE ÉQUIPÉ D'UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2016   DE 102016116963**

(43) Veröffentlichungstag der Anmeldung:
**17.07.2019   Patentblatt 2019/29**

(73) Patentinhaber: **KNORR-BREMSE Systeme für Nutzfahrzeuge GmbH 80809 München (DE)**

(72) Erfinder:
• **NOHL, Andreas 71126 Gäufelden (DE)**
• **GÜCKER, Ulrich 71701 Schwieberdingen (DE)**
• **BANSPACH, Jochen 74921 Helmstadt-Bargen (DE)**

(56) Entgegenhaltungen:
WO-A1-2018/046263        DE-A1- 19 654 691
DE-A1-102007 050 962     DE-A1-102009 041 555
DE-A1-102009 041 556     DE-A1-102011 116 822
US-A1- 2009 009 306

**Beschreibung**

Die Erfindung betrifft eine Vorrichtung zum Warnen eines Fahrzeugführers eines Fahrzeugs vor einem Objekt gemäß dem Oberbegriff von Anspruch 1 sowie ein Fahrzeug mit einer solchen Vorrichtung gemäß Anspruch 13.

Bei solchen Warnvorrichtungen ist es wünschenswert, dass vor den von der Sensoreinrichtung erfassten Objekten nur dann gewarnt wird, wenn dies angesichts der Fahrsituation auch tatsächlich angemessen ist, weil ansonsten aufgrund einer unnötig häufigen Erzeugung von Warnsignalen die Akzeptanz der Vorrichtung beim Fahrer verringert wird.

Eine gattungsgemäße Vorrichtung zum Warnen eines Fahrzeugführers eines Fahrzeugs vor einem Objekt ist beispielsweise aus DE 10 2009 041 555 A1 und aus DE 10 2009 041 556 A1 bekannt. Dort wird jeweils eine dynamische Reichweitenbegrenzung eines Erfassungsbereichs von Sensoren für einen Abbiegeassistenten und einen Totwinkelassistenten beschrieben, um den Fahrer von andauernden akustischen Warnungen zu entlasten. Insbesondere wird dort die dynamische, geschwindigkeitsabhängige Reichweitenbegrenzung der Sensoren mit geschwindigkeitsabhängigen Warnbereichen mit zugeordneten Warnsignalen kombiniert.

Eine weitere Vorrichtung zum Warnen eines Fahrzeugführers eines Fahrzeugs vor einem Objekt wird in DE 10 2011 116 822 A1 beschrieben. Dort wird ein Überwachungssystem vorgestellt, bei dem ein Warnsignal ausgelöst wird, wenn bei einem Abbiegevorgang innerhalb eines variabel anpassbaren Warnbereichs eine Kollisionsgefahr festgestellt wird, wobei der variabel anpassbare Warnbereich an die Verkehrssituation angepasst wird.

US 2009/0009306 A1 beschreibt eine Hinderniserkennungsvorrichtung eines Fahrzeugs mit einer Sensoreinrichtung, welche ein im Umfeld des Fahrzeugs vorhandenes Objekt detektiert. Dabei ist die Sensierdistanz (Sensing Distance) der Sensoreinrichtung abhängig von der Geschwindigkeit und von der Bewegungsrichtung des Fahrzeugs.

DE 196 54 691 A1 beschreibt ein Hinderniswarnsystem, bei dem Warnbereiche anhängig von einem Kurvenradius eines von dem Fahrzeug befahrenen Kurve definiert werden.

Der vorliegenden Erfindung liegt demgegenüber die Aufgabe zugrunde, eine Vorrichtung der oben beschriebenen Art derart weiter zu entwickeln, dass einerseits keine unnötigen Warnsignale erzeugt werden andererseits aber eine hohe Sicherheit gegenüber kritischen Situationen gegeben ist. Weiterhin soll auch ein Fahrzeug mit einer solchen Vorrichtung zur Verfügung gestellt werden.

Diese Aufgabe wird durch die Merkmale der Ansprüche 1 und 13 gelöst.

Offenbarung der Erfindung

Die Erfindung geht von einer Vorrichtung zum Warnen eines Fahrzeugführers eines Fahrzeugs vor einem Objekt aus, beinhaltend wenigstens folgendes:

a) Eine Sensoreinrichtung mit einem Erfassungsbereich, wobei die Sensoreinrichtung ein innerhalb des Erfassungsbereichs stehendes oder sich bewegendes Objekt erfassen kann,
b) eine mit der Sensoreinrichtung zusammenwirkende Steuereinrichtung, welche ausgebildet ist, dass sie die Signale der Sensoreinrichtung auf innerhalb des Erfassungsbereichs stehende oder sich bewegende Objekte auswertet und einen wenigstens abhängig von der Geschwindigkeit des Fahrzeugs dynamisch veränderbaren Warnbereich festlegt, welcher kleiner als der Erfassungsbereich oder maximal so groß wie der Erfassungsbereich ist,
c) eine Warneinrichtung, welche von der Steuereinrichtung derart angesteuert ist, dass sie zum Warnen des Fahrzeugführers ein Warnsignal erzeugt, wobei
d) die Warneinrichtung ausgebildet ist, dass sie eine Kaskade von Warnsignalen abhängig von einem Gefahrenmaß der durch das erfasste Objekt und durch das Fahrzeug hervorgerufenen Fahrsituation erzeugt, und wobei
e) die Steuereinrichtung weiterhin ausgebildet ist, dass sie bei einer Erfassung eines Objekts innerhalb des Erfassungsbereichs, welches sich seitlich versetzt vom Fahrzeug, insbesondere in Bezug zu einer Längsmittelachse des Fahrzeugs, und insbesondere parallel zur Längsmittelachse des Fahrzeugs entlang einer Objekt-Trajektorie bewegt, einen Gefahrenbereich festlegt.

Gemäß der Erfindung ist vorgesehen, dass

e1) die Festlegung des Gefahrenbereichs auf der hypothetischen Situation basiert, dass das Fahrzeug vorzugsweise in jedem Berechnungsschritt in Richtung auf die Objekt-Trajektorie abbiegt und es zwischen der dann fiktiven Fahrzeug-Trajektorie und der Objekt-Trajektorie zu einem fiktiven Schnittpunkt kommt, und wobei
e2) der Gefahrenbereich dreieckförmig ausgebildet ist, mit einem ersten, am Fahrzeug angeordneten Eckpunkt als Referenzpunkt, einem zweiten auf der Objekt-Trajektorie angeordneten Eckpunkt und einem dritten auf der Objekt-Trajektorie angeordneten Eckpunkt, wobei der zweite Eckpunkt und der dritte Eckpunkt derart festgelegt werden, dass eine Kollision zwischen dem Objekt und dem Fahrzeug angenommen wird, wenn sich das Objekt zu dem bestimmten Zeitpunkt auf der Verbindungslinie zwischen dem zweiten Eckpunkt und dem dritten Eckpunkt auf der Objekt-Trajektorie befindet und ansonsten nicht, und dass

f) die Steuereinrichtung weiterhin ausgebildet ist, dass sie sie dann abhängig von einer Erfassung eines Objekts innerhalb oder außerhalb des Warnbereichs und innerhalb oder außerhalb des Gefahrenbereichs ein dem dann jeweils vorliegenden Gefahrenmaß entsprechendes Warnsignal innerhalb der Kaskade von Warnsignalen erzeugt.

Insbesondere ist die Steuereinrichtung ausgebildet, dass sie falls von der Sensoreinrichtung

a1) außerhalb des Warnbereichs und außerhalb des Gefahrenbereichs aber innerhalb des Erfassungsbereichs ein Objekt erfasst wird, ein erstes Warnsignal oder kein Warnsignal erzeugt,

a2) innerhalb des Gefahrenbereichs und innerhalb des Warnbereichs oder außerhalb des Warnbereichs ein Objekt erfasst wird, ein zweites Warnsignal erzeugt wird,

a3) außerhalb des Warnbereichs aber innerhalb des Gefahrenbereichs ein Objekt sowie ein relativ zueinander Bewegen des Fahrzeugs und des Objekts erfasst wird, oder innerhalb des Warnbereichs und innerhalb des Gefahrenbereichs ein Objekt sowie kein relativ zueinander Bewegen des Fahrzeugs und des Objekts erfasst wird, ein drittes Warnsignal erzeugt wird,

a4) innerhalb des Warnbereichs und innerhalb des Gefahrenbereichs ein Objekt sowie ein relativ zueinander Bewegen des Fahrzeugs und des Objekts erfasst wird, ein viertes Warnsignal erzeugt wird, wobei

b) von dem ersten Warnsignal bis zum vierten Warnsignal das Gefahrenmaß ansteigt.

Mit einer Kombination einer Generierung eines wenigstens geschwindigkeitsabhängig dynamisch anpassbaren Warnbereichs und eines auf eine konkrete Objekterfassungssituation bezogenen Gefahrenbereichs durch die Steuereinrichtung wird zum einen der Warnbereich möglichst klein gehalten, um wie oben bereits erwähnt eine zu hohe Anzahl und Frequenz von Warnsignalen zu vermeiden. Andererseits ermöglicht der Gefahrenbereich eine Beurteilung einer konkreten Objekterfassungssituation in Bezug auf eine mögliche Kollision. Warnbereich und Gefahrenbereich sind insbesondere voneinander unabhängige Bereiche und können, aber müssen sich nicht überschneiden oder überdecken. Im Hinblick auf den Gefahrenbereich ist die Steuereinrichtung daher ausgebildet, dass sie zu jedem Zeitpunkt der Fahrt des Fahrzeugs eine Vorhersage dahingehend macht, ob ein fiktives Abbiegen des Fahrzeugs in Richtung auf die Objekt-Trajektorie zu einer Kollision mit einem erfassten Objekt führt oder nicht. Dadurch wird insgesamt die mittels der Vorrichtung erzielbare Verkehrssicherheit vorteilhaft hoch, ohne dass der Fahrer durch zu häufige und zahlreiche Warnsignale abgelenkt wird.

Durch die in den Unteransprüchen aufgeführten Maßnahmen sind vorteilhafte Weiterbildungen und Verbesserungen des zweiten Aspekts der Erfindung möglich.

Gemäß einer bevorzugten Ausführungsform ist die Steuereinrichtung weiterhin ausgebildet, dass sie den Gefahrenbereich zeitabhängig in Zeitschritten festlegt, wenigstens abhängig von der zu dem jeweiligen Zeitschritt aktuell vorliegenden Objekt-Trajektorie und/oder der Geschwindigkeit des Fahrzeugs. Damit wird der Gefahrenbereich an die jeweils aktuell vorliegende Objekt-Trajektorie des Objekts angepasst und etwaige Änderung der Objekt-Trajektorie über der Zeit berücksichtigt, z.B. Richtungs- und/oder Geschwindigkeitsänderungen des Objekts. Alternativ oder zusätzlich wird eine Änderung der Geschwindigkeit des Fahrzeugs berücksichtigt, während die Bewegungsrichtung auf das Objekt zu durch die fiktive Fahrzeug-Trajektorie vorgegeben ist.

Gemäß einer bevorzugten Weiterbildung stellt der erste Eckpunkt oder Referenzpunkt eine Stelle oder einen Bereich am Fahrzeug derart, an welcher wenigstens ein Sensor der Sensoreinrichtung angeordnet ist, durch welchen das Objekt erfasst wird.

Auch kann die Steuereinrichtung ausgebildet sein, dass sie den zweiten Eckpunkt und den dritten Eckpunkt wenigstens abhängig von einem kleinst möglichen oder minimalen Radius festlegt, den das mit einer zu dem Zeitpunkt mit einer bestimmten Geschwindigkeit fahrende Fahrzeug noch ohne Gefahr befahren kann, wenn es unter einer maximal möglichen Querbeschleunigung fiktiv in Richtung auf die Objekt-Trajektorie abbiegt.

Gemäß einer bevorzugten Weiterbildung sind die Warnsignale optische Signale mit jeweils unterschiedlichen Farben und/oder akustische Signale mit jeweils unterschiedlichen Tönen und/oder Tonfolgen.

Die Steuereinrichtung legt den Erfassungsbereich bevorzugt derart fest, dass er sich wenigstens von einem vor einer Fahrzeugfront angeordneten Fronterfassungsbereich einschließlich des Fronterfassungsbereichs über einen seitlich von einer Fahrzeugseite angeordneten Seitenerfassungsbereich bis zu einem Heckerfassungsbereich vor einem Fahrzeugheck einschließlich des Heckerfassungsbereichs erstreckt.

Gemäß einer Weiterbildung der Erfindung ist die Steuereinrichtung ausgebildet, dass der dynamisch veränderbare Warnbereich A_info zwischen einem von Null verschiedenen Minimal-Warnbereich A_info_min und einem Maximal-Warnbereich A_info_max innerhalb des Seitenerfassungsbereichs senkrecht zu einer Längsmittelachse des Fahrzeugs gesehen veränderbar ist. Mit anderen Worten wird dann der Warnbereich lediglich in seitlicher Richtung verändert, während er in Richtung der Längsmittelachse des Fahrzeugs gesehen konstant bleibt.

Gemäß einer Weiterbildung der Erfindung ist die Steuereinrichtung weiterhin ausgebildet, dass sie den dynamisch veränderbaren Warnbereich in Richtung der Längsmittelachse des Fahrzeugs gesehen in den Heckerfassungsbereich ausdehnt, falls durch die Sensoreinrichtung in dem Heckerfassungsbereich ein Objekt erfasst wird, und/oder in den Fronterfassungsbereich ausdehnt, falls durch die Sensoreinrichtung in dem Fronterfassungsbereich ein Objekt erfasst wird, falls von der Sensoreinrichtung erfasst wird, dass sich das Fahrzeug und das Objekt aufeinander zu bewegen.

Mit anderen Worten wird der dynamisch veränderbare Warnbereich, innerhalb dessen überhaupt ein Warnsignal erzeugbar ist, wenn dort ein Objekt erfasst wird, in den Fronterfassungsbereich und/oder in den Heckerfassungsbereich des Erfassungsbereichs erweitert, falls dies notwendig ist. Die Vorteile dieser Vorgehensweise sind bereits oben zum ersten Aspekt der Erfindung ausführlich diskutiert.

Gemäß einer Weiterbildung kann die Steuereinrichtung ausgebildet sein, dass sie ein tatsächliches oder beabsichtigtes Abbiegen des Fahrzeugs repräsentierende Signale empfangen kann und den dynamisch veränderbaren Warnbereich quer zur Längsmittelachse des Fahrzeugs gesehen an der Fahrzeugseite innerhalb des Seitenerfassungsbereichs seitlich erweitert, zu welcher ein Abbiegen des Fahrzeugs hin tatsächlich vorliegt oder beabsichtigt ist. Auch dadurch wird die Sicherheit beim Abbiegen des Fahrzeugs erhöht.

Gemäß einer Weiterbildung ist der der Seitenerfassungsbereich des Erfassungsbereichs seitlich von der Fahrzeugseite angeordnet ist, welche die von einem Fahrersitz des Fahrzeugs abgewandte Fahrzeugseite darstellt. Dann können kritische Situationen besonders bei links gesteuerten Fahrzeugen beim Rechtsabbiegen vermieden werden. Alternativ kann der Seitenerfassungsbereich des Erfassungsbereichs auch seitlich von der Fahrzeugseite angeordnet sein, welche die dem Fahrersitz des Fahrzeugs zugewandte Fahrzeugseite darstellt. In diesem Fall können kritische Situationen besonders beim Linksabbiegen vermieden werden.

Bevorzugt wird der dynamisch veränderbare Warnbereich mit sinkender Geschwindigkeit des Fahrzeugs kleiner, wobei ein Minimal-Warnbereich eine untere Grenze darstellt. Hintergrund ist, dass es bei relativ geringer Geschwindigkeit z.B. im Stadtverkehr und einem relativ großen Warnbereich wegen der in der Regel z.B. an einer Kreuzung zahlreich vorhandener Objekte eine entsprechend hohe Anzahl von Warnsignalen erzeugt werden würden, welche den Fahrzeugführer überfordern würden. Ein dann kleinerer Warnbereich sorgt dann dafür, dass sich die Zahl der Warnsignale vorteilhaft reduziert. Umgekehrt wird der dynamisch veränderbare Warnbereich mit steigender Geschwindigkeit des Fahrzeugs größer, wobei ein Maximal-Warnbereich z.B. in Form des Erfassungsbereichs eine obere Grenze darstellt.

Die Erfindung betrifft auch ein Fahrzeug, welches mit einer Vorrichtung nach der Erfindung versehen ist.

Zeichnung

Nachstehend sind Ausführungsbeispiele der Erfindung in der Zeichnung dargestellt und in der nachfolgenden Beschreibung näher erläutert. In der Zeichnung zeigt

Fig.1   einen vorderen Teil einer Seitenansicht eines Fahrzeugs mit einer Vorrichtung zum Warnen eines Fahrzeugführers eines Fahrzeugs vor einem Objekt;

Fig.2   eine Draufsicht auf das Fahrzeug von Fig.1 mit einem symbolisch dargestellten Erfassungsbereich einer Sensoreinrichtung der Vorrichtung;

Fig.3   eine stark schematisierte Draufsicht auf das Fahrzeug von Fig.1 mit einem symbolisch dargestellten dynamisch veränderbaren Warnbereich der Vorrichtung,

Fig.4   eine stark schematisierte Draufsicht auf das Fahrzeug von Fig.1 mit einem symbolisch dargestellten dynamisch veränderbaren Warnbereich und einem symbolisch dargestellten Gefahrenbereich gemäß einer Vorrichtung gemäß der Erfindung;

Fig.5   eine Verkehrssituation zwischen dem Fahrzeug von Fig.1 und einem Objekt, auf welche von der bevorzugten Ausführungsform der Vorrichtung gemäß der Erfindung eine niedrigste Stufe von Warnsignal erzeugt wird;

Fig.6   eine Verkehrssituation zwischen dem Fahrzeug von Fig.1 und einem Objekt, auf welche von der bevorzugten Ausführungsform der Vorrichtung gemäß der Erfindung eine gegenüber der niedrigsten Stufe höhere Stufe von Warnsignal erzeugt wird;

Fig.7   eine Verkehrssituation zwischen dem Fahrzeug von Fig.1 und einem Objekt, auf welche von der bevorzugten Ausführungsform der Vorrichtung gemäß der Erfindung eine gegenüber der niedrigsten Stufe höhere Stufe von Warnsignal erzeugt wird;

Fig.8   eine Verkehrssituation zwischen dem Fahrzeug von Fig.1 und einem Objekt, auf welche von der bevorzugten Ausführungsform der Vorrichtung gemäß der Erfindung eine gegenüber der niedrigsten Stufe höhere Stufe von Warnsignal erzeugt wird;

Fig.9   eine Verkehrssituation zwischen dem Fahrzeug von Fig.1 und einem Objekt, auf welche von der bevorzugten Ausführungsform der Vorrichtung gemäß der Erfindung eine höchste Stufe von Warnsignal erzeugt wird.

Beschreibung der Ausführungsbeispiele

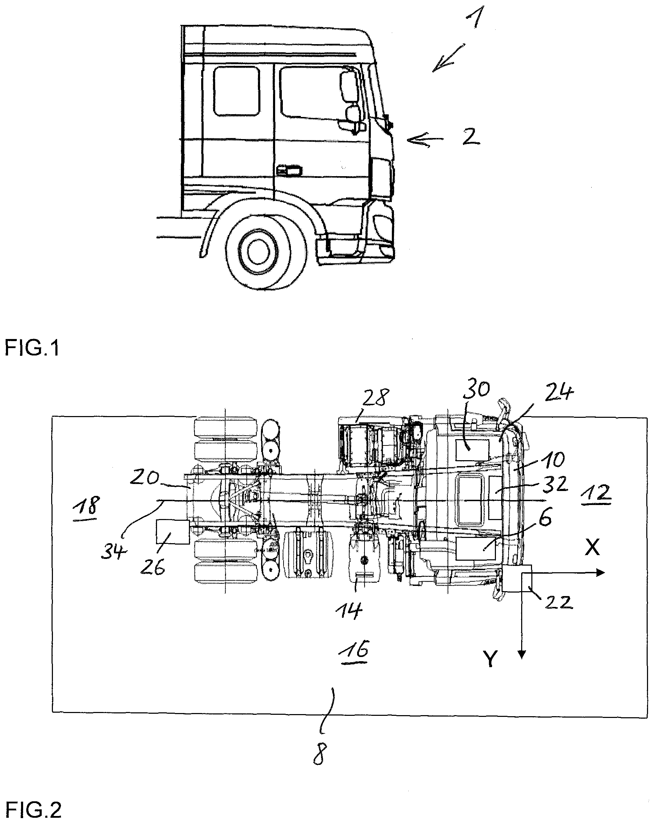

In **Fig.1** ist ein vorderer Teil einer Seitenansicht eines hier beispielsweise Linkslenker-Fahrzeugs 1, insbesondere eines Zugfahrzeugs einer Zugfahrzeug-Anhängerkombination mit einer Vorrichtung 2 zum Warnen eines Fahrzeugführers des Fahrzeugs vor einem Objekt 4 gezeigt.

Die Vorrichtung 2 beinhaltet eine Sensoreinrichtung 6 mit einem Erfassungsbereich 8, welcher sich wenigstens von einem vor einer Fahrzeugfront 10 angeordneten Fronterfassungsbereich 12 bis zu einem seitlich von einer hier beispielsweise rechten Fahrzeugseite 14 angeordneten Seitenerfassungsbereich 16 erstreckt. Weiterhin umfasst der Erfassungsbereich 8 auch einen Heckerfassungsbereich 18 hinter dem Fahrzeugheck 20, welcher sich von einem hinteren Ende des Seitenerfassungsbereichs 16 bis zu einem von dem Seitenerfassungsbereich 16 weg weisenden Ende des Heckerfassungsbereichs 18 erstreckt (**Fig.2**).

Der Erfassungsbereich 8 ist hier idealisiert rechteckförmig dargestellt, kann aber abhängig von der Art der Sensoreinrichtung 6 eine beliebige Form aufweisen. Die Sensoreinrichtung 6 kann ein innerhalb des Erfassungsbereichs 8 stehendes oder sich bewegendes Objekt 4 erfassen sowie vorzugsweise auch, mit welcher Geschwindigkeit v_target sich dieses Objekt und in welcher Richtung bewegt.

In **Fig.1** und **Fig.2** sind von der Sensoreinrichtung 6 ein erster Sensor 22 an der rechten vorderen Kante eines Fahrerhauses 24 und ein zweiter Sensor 26 am hinteren Ende eines in Fahrtrichtung rechten Längsrahmenträgers eines Leiterrahmes des Zugfahrzeugs erkennbar. Darüber hinaus kann die Sensoreinrichtung 6 noch weitere Sensoren beinhalten, welche den Erfassungsbereich 8 dann erweitern, beispielsweise auch auf den anderen Seitenerfassungsbereich auf der anderen Fahrzeugseite 28. Bei dem Sensor bzw. bei den Sensoren handelt es sich beispielsweise um Radarsensoren, Lasersensoren oder auch Kameras.

Weiterhin beinhaltet die Vorrichtung 2 auch eine mit der Sensoreinrichtung 6 zusammen wirkende Steuereinrichtung 30, welche ausgebildet ist, dass sie die Signale der Sensoreinrichtung 6 dahingehend auswertet, ob ein Objekt 4 und/oder welche Art von Objekt 4 (stehend oder sich bewegend) sich innerhalb des Erfassungsbereichs 8 befindet wie auch, in welcher Richtung sich dieses Objekt 4 bewegt. Außerhalb des Erfassungsbereichs 8 soll keine Erfassung von Objekten 4 möglich sein.

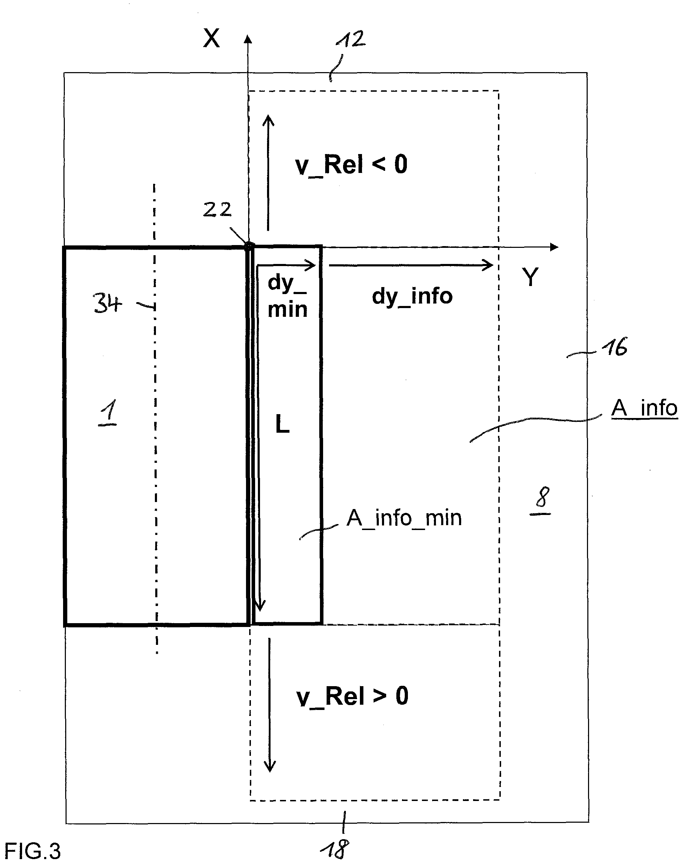

Die Steuereinrichtung 30 ist auch ausgebildet, dass sie einen abhängig von der Geschwindigkeit v_ego des Fahrzeugs 1 dynamisch veränderbaren Warnbereich A_info festlegt, der in **Fig.3** in gestrichelter Linie dargestellt ist. Dynamisch veränderbarer Warnbereich A_info bedeutet, dass die äußeren Grenzen bzw. Ränder des Warnbereichs A_info veränderbar sind. Der dynamisch veränderbare Warnbereich A_Info ist stets kleiner oder gleich in Bezug zu dem Erfassungsbereich 8, d.h. er kann generell nicht größer als der Erfassungsbereich 8 sein. Der dynamisch veränderbare Warnbereich A_info wird von der Steuereinrichtung 30 abhängig von der Geschwindigkeit v_ego des Fahrzeugs 1 festgelegt oder berechnet.

Bevorzugt wird der dynamisch veränderbare Warnbereich A_info mit sinkender Geschwindigkeit des Fahrzeugs kleiner, wobei der Minimal-Warnbereich A_info_min eine untere Grenze darstellt. Hintergrund ist, dass es bei relativ geringer Geschwindigkeit z.B. im Stadtverkehr und einem relativ großen Warnbereich A_info wegen der in der Regel z.B. an einer Kreuzung zahlreich vorhandener Objekte eine entsprechend hohe Anzahl von Warnsignalen erzeugt werden würden, welche den Fahrzeugführer überfordern würden. Ein dann kleinerer Warnbereich A info sorgt dann dafür, dass sich die Zahl der Warnsignale vorteilhaft reduziert. Umgekehrt wird der dynamisch veränderbare Warnbereich A_info mit steigender Geschwindigkeit des Fahrzeugs größer, wobei der Maximal-Warnbereich z.B. in Form des Erfassungsbereichs 8 eine obere Grenze darstellt.

Weiterhin weist die Vorrichtung 2 auch eine Warneinrichtung 32 auf, welche von der Steuereinrichtung derart angesteuert ist, dass sie zum Warnen des Fahrzeugführers nur dann ein Warnsignal erzeugt, wenn von der Sensoreinrichtung in dem dynamisch veränderbaren Warnbereich ein Objekt erfasst wird.

**Fig.3** zeigt eine stark schematisierte Draufsicht auf das Fahrzeug von **Fig.1** mit dem dort symbolisch durch in gestrichelten Linien gezeichnete Rechtecke dargestellten dynamisch veränderbaren Warnbereich A_info. Wie aus **Fig. 3** hervorgeht, ist der Warnbereich A_info zum einen zwischen dem von Null verschiedenen Minimal-Warnbereich A_info_min und einem Maximal-Warnbereich A_info_max innerhalb des Seitenerfassungsbereichs 8 senkrecht zu einer Längsmittelachse 34 des Fahrzeugs gesehen veränderbar. Die Länge des Minimal-Warnbereichs A_info_min ist dabei beispielsweise mit der Länge L des Fahrzeugs 1 identisch und deckt sich mit dieser. Die Breite des Minimal-Warnbereichs A_info_min beträgt in **Fig.3** dy_min.

Weiterhin kann sich der Warnbereich A_info auch in Richtung der Längsmittelachse 34 des Fahrzeugs 1 gesehen in den Heckerfassungsbereich 18 ausdehnen, falls durch die Sensoreinrichtung 6 in dem Heckerfassungsbereich 18 ein Objekt 4 erfasst wird, beispielsweise ein auf einem Fahrrad fahrender Radfahrer, welcher sich von hinten rechts auf das Fahrzeug 1 zu und parallel zu diesem bewegt. Dann ist beispielsweise die Geschwindigkeit v_target des Radfahrers 4 größer als die Geschwindigkeit v_ego des Fahrzeugs 1, weil z.B. das Fahrzeug 1 an einer Kreuzung steht und der Radfahrer 4 von hinten rechts auf das Fahrzeug 1 zu fährt, um beispielsweise neben der in **Fig.3** rechten Fahrzeugseite 14 des Fahrzeugs 1 zum Stehen zu kommen. Diese Situation ist in **Fig.3** mit v_Rel > 0 charakterisiert, weil dann davon ausgegangen wird, dass die Relativgeschwindigkeit v_Rel bzw. die Differenz zwischen der Geschwindigkeit v_target des Objekts 4 und der Geschwindigkeit v_ego des Fahrzeugs 1 größer als 0 ist. Die in der Folge dann durch die Steuereinrichtung 30 veranlasste Erweiterung des Warnbereichs A_info in den Heckerfassungsbereich 18 hinein ist im unteren Teil von **Fig.3** dargestellt.

Weiterhin kann sich der dynamisch veränderbare Warnbereich A info auch in den Fronterfassungsbereich 12 des Erfassungsbereichs 8 ausdehnen, falls durch die Sensoreinrichtung 6 in dem Fronterfassungsbereich 12 ein Objekt 4 erfasst wird, beispielsweise wiederum ein auf einem Fahrrad fahrender Radfahrer, welcher sich von vorne rechts vor dem Fahrzeug 1 und beispielsweise parallel zu diesem bewegt. Da beispielsweise die Geschwindigkeit v_target des Radfahrers kleiner als die Geschwindigkeit v_ego des Fahrzeugs ist, bewegt sich der Radfahrer 4 quasi von vorne auf das Fahrzeug zu. Diese Situation ist in **Fig.3** mit v_Rel < 0 charakterisiert, weil dann davon ausgegangen wird, dass die Relativgeschwindigkeit bzw. die Differenz zwischen der Geschwindigkeit v_ego des Fahrzeugs und der Geschwindigkeit v_target des Objekts kleiner als 0 ist. Die in Folge dann durch die Steuereinrichtung 30 veranlasste Erweiterung des dynamisch veränderbaren Warnbereichs A_info in den Fronterfassungsbereich 12 hinein ist im oberen Teil von **Fig. 3** dargestellt.

In **Fig.2** und **Fig.3** ist weiterhin ein Koordinatensystem X-Y mit dem Nullpunkt an der rechten vorderen Kante des Fahrzeugs 1 dargestellt, wobei die Y-Richtung (positive Werte ausgehend vom Nullpunkt nach rechts) senkrecht zur Längsmittelachse 34 des Fahrzeugs 1 und die X-Richtung (positive Werte ausgehend vom Nullpunkt nach vorne, negative Werte ausgehend vom Nullpunkt nach hinten) parallel zur Längsmittelachse 34 des Fahrzeugs 1 verläuft.

Ausgehend jeweils vom Nullpunkt wird mit dy_info die Breite des dynamisch veränderbaren Warnbereichs A_info in Y-Richtung, mit dy_min die Mindestbreite des Minimum-Warnbereichs A_info_min in Y-Richtung, mit v_ego die Geschwindigkeit des Fahrzeugs und mit vy_Rel die Relativgeschwindigkeit zwischen dem erfassten Objekt 4 und dem Fahrzeug1 in Y-Richtung bezeichnet.

Dann gilt für die Fläche des Minimum-Warnbereichs A_Info_min seitlich des Fahrzeugs 1 (hier rechte Seite)

$$A\_Info\_min = dy\_min * l\_truck \qquad\qquad (1)$$

wobei l_truck die Länge L des Fahrzeugs 1 oder des Fahrzeugzugs ist.

Weiterhin gilt für die Breite dy_info des dynamisch veränderbaren Warnbereichs A_info abhängig von der Relativgeschwindigkeit vy_Rel in Y-Richtung:

$$dy\_info = dy\_min + coeff\_vx1 * v\_ego^2 + coeff\_vx2 * v\_ego + coeff\_vy * vy\_rel \quad (2)$$

wobei coeff_vx1, coeff_vx2 und coeff_vy Koeffizienten sind, welche von der Fahrzeuggeschwindigkeit v_ego in X-und Y-Richtung bzw. von der Geometrie des Fahrzeugs 1 abhängen.

Für den Fall, dass es im hinteren Heckerfassungsbereich 18 zu einer Relativbewegung zwischen dem Fahrzeug 1 und dem erfassten Objekt 4 kommt, gilt wie oben bereits ausgeführt:

$$v\_Rel > 0 \qquad\qquad (3)$$

Dann gilt für die Änderung dx_max der Länge L des Warnbereichs A_info ausgehend vom Nullpunkt nach vorne hin:

$$dx\_max = 0 \qquad\qquad (4)$$

Mit anderen Worten ist dann keine Verlängerung dx_max des Warnbereichs A info nach vorne hin notwendig, weil sich von vorne dem Fahrzeug 1 kein Objekt 4 nähert bzw. kein Objekt 4 vor dem Fahrzeug 1 erfasst wurde.

Demgegenüber gilt dann für die Änderung dx_min der Länge des Warnbereichs A_info ausgehend vom Nullpunkt nach hinten:

$$dx\_min = - l\_truck - coeff\_vRel * vRel \qquad\qquad (5)$$

wobei l_truck die Länge L des Fahrzeugs 1 oder des Fahrzeugzugs und coeff_vRel ein konstanter Koeffizient ist.

Mit anderen Worten ist dann eine Verlängerung dx_min des Warnbereichs A_info nach hinten hin notwendig, weil sich von hinten dem Fahrzeug 1 ein Objekt 4 nähert.

Für den Fall, dass es im vorderen Fronterfassungsbereich 12 zu einer Relativbewegung zwischen dem Fahrzeug 1 und dem erfassten Objekt 4 kommt, gilt wie oben bereits ausgeführt:

$$v\_Rel < 0 \qquad\qquad (6)$$

Dann gilt für die Änderung dx_max der Länge des Warnbereichs A_info ausgehend vom Nullpunkt nach vorne hin:

$$dx\_max = - coeff\_vRel * vRel \qquad\qquad (7)$$

wobei coeff_vRel ein konstanter Koeffizient ist.

Dann gilt für die Änderung dx_min der Länge des Warnbereichs A_info ausgehend vom Nullpunkt nach hinten hin:

$$dx\_min = - l\_truck \qquad\qquad (8)$$

Folglich wird der Warnbereich A_info nach hinten hin nicht verlängert, weil dort kein Objekt 4 erfasst wurde.

Demzufolge können auch Situationen berücksichtigt werden, in welchen sich Objekte 4 im Wesentlichen in derselben Richtung wie das Fahrzeug 1 bewegen, d.h. dass die Trajektorie der Objekte 4 parallel zur Längsmittelachse 34 des Fahrzeugs 1 ist und die Objekte 4 bezogen auf die Längsmittelachse 34 des Fahrzeugs 1 sich nicht nur seitlich des Fahrzeugs 1 sondern zusätzlich auch entweder vor oder hinter dem Fahrzeug 1, d.h. sich vor der Fahrzeugfront 10 oder hinter dem Fahrzeugheck 20 befinden. Weiterhin auch Situationen, in den das Objekt 4 steht und sich das fahrende Fahrzeug 1 von vorne oder hinten auf das Objekt 4 zubewegt.

Durch die Erweiterung des dynamisch veränderbaren Warnbereichs A_info in den Front- und/oder Heckbereich des Fahrzeugs 1 wird der Fahrer bereits vor einem beabsichtigten Abbiegen in Richtung der überwachten Fahrzeugseite 14 des Fahrzeugs 1 vor Objekten 4 durch Warnsignale gewarnt, welchen sich relativ zum Fahrzeug 1 dem Fahrzeug 1 von hinten oder vorne annähern, sich aber noch nicht in dem innerhalb des Seitenerfassungsbereichs 16 angeordneten dynamisch veränderbaren Warnbereichs A_info befinden, aber zu erwarten ist, dass sie sich bald dort befinden werden. Denn gerade bei solchen Objekten 4 besteht die Gefahr, dass sie beim hier Rechtsabbiegen des Fahrzeugs 1 vom Fahrer übersehen werden und es dann zu einer Kollision kommt.

Bevorzugt wird der dynamisch veränderbare Warnbereich A_info mit sinkender Geschwindigkeit v_ego des Fahrzeugs 1 kleiner, wobei der Minimal-Warnbereich A_Info_min eine untere Grenze darstellt. Umgekehrt wird bevorzugt der dynamisch veränderbare Warnbereich A_info mit steigender Geschwindigkeit v_ego des Fahrzeugs 1 größer, wobei der Maximal-Warnbereich A_Info_max z.B. in Form des Erfassungsbereichs 8 eine obere Grenze darstellt.

Bevorzugt ist die Steuereinrichtung 30 ausgebildet, dass sie ein tatsächliches oder beabsichtigtes Abbiegen des Fahrzeugs 1 repräsentierende Signale empfangen kann und den dynamisch veränderbaren Warnbereich A_info quer zur Fahrtrichtung (X-Richtung) oder zur Längsmittelachse 34 des Fahrzeugs 1 gesehen an der Fahrzeugseite 14 seitlich erweitert, zu welcher ein Abbiegen des Fahrzeugs 1 hin tatsächlich vorliegt oder beabsichtigt ist. Diese Signale können beispielsweise von einer Betätigung eines Fahrrichtungsanzeigers (Blinker) und/oder einem Lenkradwinkelsensor stammen, welcher eine Drehbewegung des Lenkrads sensiert. Der Seitenerfassungsbereich 16 des Erfassungsbereichs 8 ist bevorzugt seitlich von der Fahrzeugseite 14 außen angeordnet, welche die von einem Fahrersitz des Fahrzeugs abgewandte Fahrzeugseite darstellt. Dann können kritische Situationen besonders bei links gesteuerten Fahrzeugen 1 beim Rechtsabbiegen vermieden werden. Alternativ kann der Seitenerfassungsbereich 16 des Erfassungsbereichs 8 auch seitlich von der anderen Fahrzeugseite 28 angeordnet sein, welche die dem Fahrersitz des Fahrzeugs zugewandte Fahrzeugseite darstellt. In diesem Fall können kritische Situationen besonders bei rechts gesteuerten Fahrzeugen 1 beim Linksabbiegen vermieden werden.

Die oben stehenden Maßnahmen gelten selbstverständlich auch für Rechtslenker-Fahrzeuge mit jeweils vertauschten Seiten.

Die Warneinrichtung 32 ist bevorzugt ausgebildet, dass sie eine Kaskade von Warnsignalen abhängig von einem Gefahrenmaß der durch das erfasste Objekt und/oder durch das Fahrzeug 1 hervorgerufenen Fahrsituation erzeugt. Die Warnsignale können beispielsweise optische Signale mit jeweils unterschiedlichen Farben und/oder akustische Signale mit jeweils unterschiedlichen Tönen und/oder Tonfolgen sein.

Eine Kaskade von Warnsignalen kann dabei beispielsweise vom Gefahrenmaß abhängige Farben eines optischen Signals und/oder ein vom Gefahrenmaß abhängiges akustisches Signal beinhalten. Beispielsweise können durch die Warneinrichtung bei Vorliegen eines vernachlässigbaren Gefahrenmaßes ein optisches grünes Warnsignal, bei Vorliegen eines geringen Gefahrenmaßes ein optisches gelbes Warnsignal, bei Vorliegen eines mittleren Gefahrenmaßes ein optisches rotes optisches Warnsignal und bei Vorliegen eines hohen Gefahrenmaßes ein optisches rotes Signal und zusätzlich ein akustisches Signal erzeugt werden. Auch können Frequenz und/oder Tonfolge des akustischen Signals abhängig vom Gefahrenmaß variiert werden.

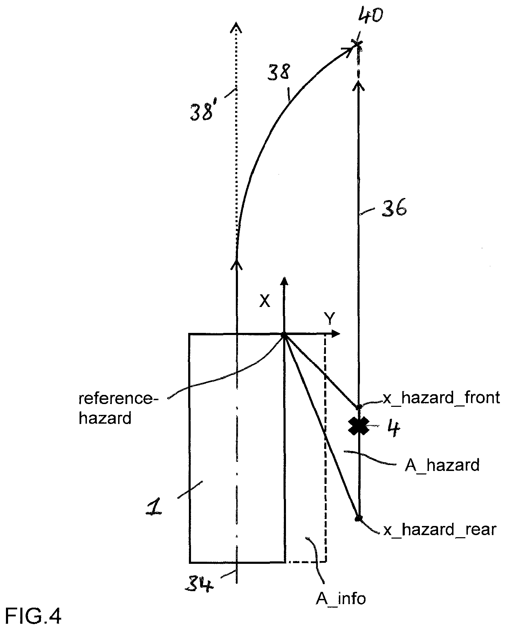

Fig.4 zeigt eine stark schematisierte Draufsicht auf das Fahrzeug 1 von Fig.1 mit einem symbolisch dargestellten dynamisch veränderbaren Warnbereich A_info wie er oben bereits beschrieben wurde. Zusätzlich ist hier ein Gefahrenbereich A_hazard symbolisch dargestellt.

Wie in Fig.3 ist auch in Fig.4 ist ein Koordinatensystem X-Y mit dem Nullpunkt an der beispielsweise rechten vorderen Kante des Fahrzeugs 1 dargestellt, wobei die Y-Richtung (positive Werte ausgehend vom Nullpunkt nach rechts) senkrecht zur Längsmittelachse 34 des Fahrzeugs 1 und die X-Richtung (positive Werte ausgehend vom Nullpunkt nach vorne, negative Werte ausgehend vom Nullpunkt nach hinten) parallel zur Längsmittelachse 34 des Fahrzeugs 1 verläuft.

Wie bei dem vorangehend beschriebenen Ausführungsbeispiel soll auch hier der Warnbereich A_info wenigstens abhängig von der Geschwindigkeit v_ego des Fahrzeugs dynamisch veränderbar sein, wobei der Warnbereich A_info bevorzugt mit steigender Geschwindigkeit v_ego ausgehend von einem Minimal-Warnbereich A_info_min ebenfalls größer wird.

Ein erster Pfeil in Fig.4 symbolisiert die Objekt-Trajektorie 36 eines sich rechts vom Fahrzeug 1 mit einer Geschwindigkeit v_target bewegenden und von der Sensoreinrichtung 6 innerhalb des Erfassungsbereichs 8 erfassten Objekts 4, beispielsweise eines Radfahrers. Das Objekt 4 bewegt sich in Fig.4 daher in Bezug auf die Längsmittelachse 34 des Fahrzeugs 1 beispielsweise etwa parallel zum Fahrzeug 1, aber seitlich versetzt von diesem entlang der Objekt-Trajektorie 36. Ein zweiter Pfeil in Fig.4 symbolisiert die Fahrzeug-Trajektorie 38 des Fahrzeugs, von dem hypothetisch oder fiktiv angenommen wird, dass es zu einem bestimmten Zeitpunkt t0 nach rechts abbiegt.

Die Steuereinrichtung 30 ist dann ausgebildet ist, dass sie bei einer Erfassung des Objekts 4 den Gefahrenbereich A_hazard festlegt, wobei der Gefahrenbereich A_hazard auf der hypothetischen oder fiktiven Situation basiert, dass das Fahrzeug 1 zum Zeitpunkt t0 in Richtung auf die Objekt-Trajektorie 36 derart abbiegt, dass sich die dann fiktive Fahrzeug-Trajektorie 38 und die Objekt-Trajektorie 36 in einem fiktiven Schnittpunkt 40 schneiden. Die tatsächliche ab dem Zeitpunkt t0 des fiktiven Abbiegens weitergeführte Fahrzeug-Trajektorie 38' ist in Fig.4 durch eine gepunktete Linie gekennzeichnet.

Die Fahrzeug-Trajektorie 38, 38' und die Objekt-Trajektorie 36 werden beispielsweise in Bezug zu einem X-Y-Koordinatensystem gesetzt, welches seinen Ursprung beispielsweise an dem Ort der Anordnung des ersten Sensors 22 der Sensoreinrichtung 6 am Fahrzeug 1 hat, nämlich an der Kante zwischen Fahrzeugfront 10 und rechter Fahrzeugseite vorne rechts. Denkbar sind aber auch andere Lagen für den Ursprung des Koordinatensystems. Folglich ist hier die Objekt-Trajektorie 36 im Wesentlichen parallel zur X-Richtung des X-Y-Koordinatensystems.

Der Gefahrenbereich A_hazard ist im Wesentlichen dreieckförmig ausgebildet, mit einem ersten, am Fahrzeug angeordneten Eckpunkt als Referenzpunkt referenz-hazard, einem zweiten auf der Objekt-Trajektorie angeordneten Eckpunkt x_hazard_front und einem dritten auf der Objekt-Trajektorie angeordneten Eckpunkt x_hazard-rear. Da hier beispielhaft angenommen wird, dass sich das Objekt 4, z.B. ein Radfahrer mit seiner Objekt-Trajektorie 36 etwa parallel zur Längsmittelachse 34 des Fahrzeugs 1 und daher parallel zur X-Richtung bewegt, unterscheiden sich der vordere zweite Eckpunkt x_hazard_front und der hintere dritte Eckpunkt x_hazard-rear hier beispielsweise lediglich in ihrem Wert in X-Richtung.

Der erste Eckpunkt oder Referenzpunkt referenz-hazard des Gefahrenbereichs A_hazard ist daher am Fahrzeug 1 angeordnet und wird bevorzugt durch die Lage des hier ersten Sensors 22 oder der Sensoren am Fahrzeug 1 bestimmt, welche das Objekt 4 erfassen oder erfasst haben. Im vorliegenden Fall ist der erste Eckpunkt referenz-hazard daher beispielsweise die Stelle, an welcher der erste Sensor 22 am Fahrzeug 1 festgelegt ist, welcher dann auch das Objekt 4 detektiert. Detektiert bedeutet, dass der erste Sensor 22 wenigstens die Lage des Objekts 4 in Bezug zum ersten Sensor 22 oder Fahrzeug 1, die Geschwindigkeit v_target des Objekts 4 sowie auch die aktuelle Bewegungsrichtung des Objekts 4, d. die jeweils aktuelle Objekt-Trajektorie 36 erfasst, wobei sich die Objekt-Trajektorie 36 selbstverständlich mit der Zeit ändern kann.

Der zweite Eckpunkt x_hazard_front und der dritte Eckpunkt x_hazard_rear des Gefahrenbereichs A_hazard werden von der Steuereinrichtung 30 derart festgelegt, dass anhand von durch die Steuereinrichtung 30 durchgeführten Berechnungen von einer Kollision zwischen dem Objekt 4 und dem Fahrzeug 1 ausgegangen wird, wenn sich das Objekt 4 zu dem Zeitpunkt t0 auf der Verbindungslinie zwischen dem zweiten Eckpunkt x_hazard_front und dem dritten Eckpunkt x_hazard_rear auf der Objekt-Trajektorie 36 befindet und ansonsten nicht. Wenn sich das Objekt daher außerhalb der Verbindungslinie zwischen dem zweiten Eckpunkt x_hazard_front und dem dritten Eckpunkt x_hazard_rear auf der Objekt-Trajektorie 36 befindet, ist von keiner Kollisionsgefahr auszugehen. Diese Beurteilung erfolgt aber jeweils zeitbezogen, weil, wie oben bereits ausgeführt, sich die Objekt-Trajektorie 36 mit der Zeit ändern kann, hier beispielsweise durch ein Abbiegen des Objekts 4 in Richtung auf das Fahrzeug zu oder von diesem weg.

Die Lage des zweiten Eckpunkts x_hazard_front und die Lage des dritten Eckpunkts x_hazard_rear des Gefahrenbereich A_hazard auf der Objekt-Trajektorie 36, d.h. hier beispielsweise parallel zur X-Richtung werden dann wie folgt berechnet:

Basierend auf der Geschwindigkeit v_ego des Fahrzeugs 1 und einer maximal möglichen Querbeschleunigung a_max_lat des Fahrzeugs 1 während seines fiktiven Abbiegens wird ein kleinst möglicher Radius r_min bestimmt, den das Fahrzeug 1 noch ohne Gefahr befahren kann. Die Steuereinrichtung 30 nutzt dann den kleinst möglichen oder minimalen Radius r_min, um die unterschiedlichen Bewegungspfade der Räder des Fahrzeugs 1 zu berechnen.

Zusammen mit der Information über die Eingriffszeit, welche sich aus der Summe aus Reaktionszeit des Fahrers t_driver_react und der Zeit t_system_delay + t_brake/2 zusammensetzt, welche das Bremssystem des Fahrzeugs benötigt, bis eine Bremsreaktion stattfindet, errechnet sich dann die Distanz dx_intervention in Längsrichtung bzw. in X-Richtung bis das Fahrzeug 1 steht wie folgt:

$$dx\_intervention = v\_ego * (t\_driver\_react + t\_system\_delay + t\_brake/2)) \qquad (9)$$

Diese Distanz dx_intervention kann dann quantifiziert werden wie auch der Bewegungspfad des Radfahrers dx_target in derselben Richtung, welcher sich mit der Geschwindigkeit v_target bewegt:

$$dx\_target = v\_target * (t\_driver\_react + t\_system\_delay + t\_brake)) \qquad (10)$$

Die zweite vordere Ecke x_hazard_front des Gefahrenbereichs A_hazard in X-Richtung ist dann die Differenz der in den Formeln (9) und (10) berechneten Werte:

$$x\_hazard\_front = dx\_intervention - dx\_target \qquad (11)$$

Das dritte hintere Ecke x_hazard_rear_wird dadurch berechnet, dass von dem X-Wert der zweiten vorderen Ecke x_hazard_front die Distanz abgezogen wird, welche das sich mit der Objektgeschwindigkeit v_target bewegende Objekt 4 während der Zeit t_cross zurücklegt, die das Fahrzeug 1 benötigt, um mit seiner fiktiven Fahrzeug-Trajektorie 38 den fiktiven Schnittpunkt 40 mit der Objekt-Trajektorie 36 zu erreichen und zu welchem die Distanz dx_crossing_delta addiert wird, welche der Differenz zwischen den von den Rädern der Vorderachse und den Rädern der Hinterachse des Fahrzeugs 1 zurückgelegten Distanz entspricht, welche vom Radstand abhängt.

$$x\_hazard\_rear = x\_hazard\_front - t\_cross * v\_target + dx\_crossing\_delta \qquad (12)$$

Der Warnbereich A-hazard ist bevorzugt nicht konstant, sondern wird zeitabhängig, beispielsweise in diskreten Zeitschritten jeweils neu festgelegt oder berechnet, weil sich insbesondere die Objekt-Trajektorie 36 mit der Zeit ändern kann. Die Steuereinrichtung 30 legt den Warnbereich A_hazard daher bevorzugt zeitabhängig in Zeitschritten fest, wenigstens abhängig von der zu dem jeweiligen Zeitschritt aktuell vorliegenden Objekt-Trajektorie 36, welche wenigstens durch die dann herrschende Objektgeschwindigkeit v_target und die dann herrschende Bewegungsrichtung des Objekts 4 bestimmt wird, sowie abhängig von der Fahrzeuggeschwindigkeit v_ego, welche sich ebenfalls ändern kann.

Die Steuereinrichtung 30 ist daher ausgebildet, dass sie den Gefahrenbereich A_hazard grundsätzlich wenigstens abhängig von der Geschwindigkeit des Fahrzeugs v_ego, der Geschwindigkeit eines erfassten Objekts v_obj, der Relativgeschwindigkeit zwischen dem Fahrzeug 1 und dem erfassten Objekt v_Rel und dem Abstand zwischen dem Fahrzeug 1 und dem erfassten Objekt 4 generiert oder festlegt. Dabei ist der Gefahrenbereich A_hazard wiederum kleiner als der Erfassungsbereich 8 oder maximal so groß wie der Erfassungsbereich 8.

Die oben angeführten Berechnungen werden vorzugsweise für alle erfassten Objekte 4 parallel durchgeführt und nur das kritischste Objekt 4 der erfassten Objekte 4 zur Generierung eines Warnsignals herangezogen.

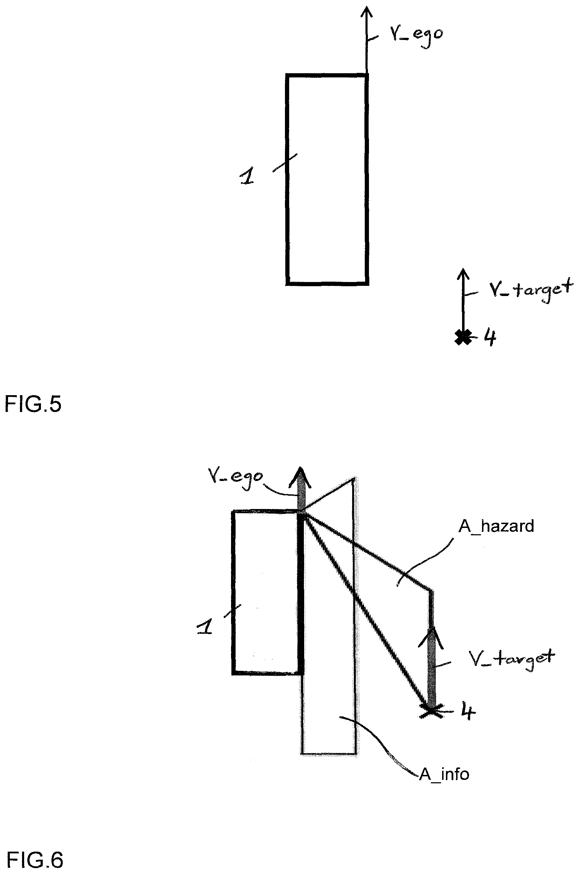

Die Steuereinrichtung 30 ist beispielsweise weiterhin ausgebildet, dass sie falls von der Sensoreinrichtung 6 außerhalb des Warnbereichs A_info und außerhalb des Gefahrenbereichs A_hazard aber innerhalb des Erfassungsbereichs 8 ein sich z.B. in Fahrtrichtung rechts hinter dem Fahrzeug 1 bewegendes Objekt 4 erfasst wird, ein erstes Warnsignal erzeugt. Diese Situation ist in **Fig.5** gezeigt. Das erste Warnsignal kann beispielweise in einem optischen grünen Signal bestehen, das auf einem im Fahrerhaus oder in einer Kabine des Fahrzeugs 1 angeordneten Display angezeigt wird. Dieses erste Warnsignal stellt dann die niedrigste Stufe von Warnsignal und daher eigentlich kein Warnsignal im engen Sinne dar, weil kein Warnbedarf besteht.

Falls ein Objekt 4 innerhalb des Warnbereichs A_info, aber außerhalb des Gefahrenbereichs A_hazard bei einem angenommenen fiktiven Abbiegen des Fahrzeugs 1 in Richtung auf ein Objekt 4 erfasst wird, so wird ein zweites Warnsignal erzeugt, welches beispielsweise in Bezug zum ersten Warnsignal die nächst höhere Stufe von Warnsignal in der Warnsignalkaskade darstellt. Das zweite Warnsignal kann beispielweise in einem optischen gelben Signal bestehen, das auf dem Display angezeigt wird. Diese Situation ist in **Fig.6** gezeigt.

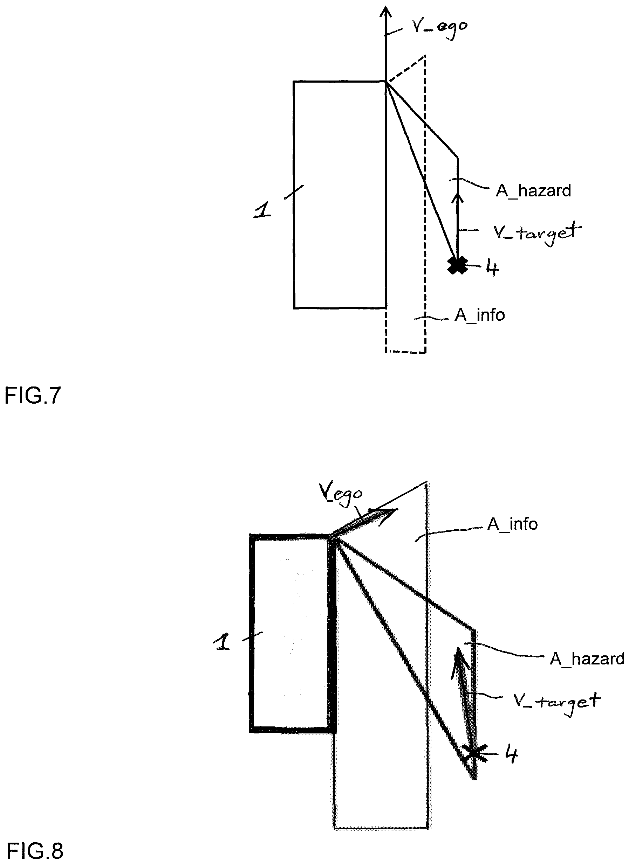

**Fig.7** zeigt eine Situation, in welcher bei einem angenommenen fiktiven Abbiegen des Fahrzeugs 1 in Richtung auf ein Objekt 4 sich das Objekt 4 innerhalb des Gefahrenbereichs AJhazard, aber außerhalb des Warnbereichs A_info befindet. Dann wird ein wiederum das zweite Warnsignal in Form des optischen gelben Signals erzeugt und auf dem Display angezeigt.

**Fig.8** zeigt eine Situation, in welcher ein Objekt 4 außerhalb des Warnbereichs A_Info aber innerhalb des Gefahrenbereichs A_hazard sowie ein tatsächliches relativ zueinander Bewegen des Fahrzeugs 1 und des Objekts 4 erfasst wird oder ein erwartetes (durch Betätigung des Fahrtrichtungsanzeigers) zueinander Bewegen durch fiktives Abbiegen des Fahrzeugs 1 in Richtung auf das Objekt 4 angenommen wird. Die Relativbewegung ist durch die Bewegungsvektoren von Fahrzeug 1 und Objekt 4 symbolisiert, wobei die Trajektorien 36, 38 einen Schnittpunkt aufweisen, was auf eine bevorstehende Kollision schließen läßt. Dann wird ein drittes Warnsignal beispielsweise in Form eines optischen roten Warnsignals auf dem Display erzeugt wird, welches in Bezug zum zweiten Warnsignal die nächst höhere Stufe von Warnsignal in der Warnsignalkaskade darstellt.

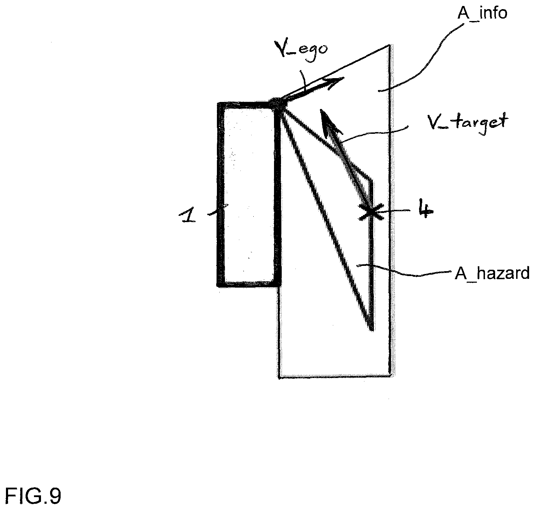

Schließlich zeigt **Fig.9** eine Situation, in welcher das Objekt innerhalb des Warnbereichs A_info und innerhalb des Gefahrenbereichs A_hazard sowie ein tatsächliches relativ zueinander Bewegen des Fahrzeugs 1 und des Objekts 4 erfasst wird oder ein erwartetes (z.B. durch Betätigung des Fahrtrichtungsanzeigers) zueinander Bewegen durch fiktives Abbiegen des Fahrzeugs 1 in Richtung auf das Objekt 4 angenommen wird. Auch hier ist die Relativbewegung durch die Bewegungsvektoren von Fahrzeug und Objekt symbolisiert, wobei die Trajektorien einen fiktiven Schnittpunkt aufweisen, was ebenfalls auf eine bevorstehende Kollision schließen lässt. Dann wird ein viertes Warnsignal beispielsweise in Form eines optisch roten Warnsignals auf dem Display sowie parallel dazu beispielsweise ein akustisches Signal erzeugt.

Generell steigt daher in der Warnsignalkaskade das Gefahrenmaß von dem ersten Warnsignal bis zum vierten Warnsignal an. Dabei sind beliebige optische und/oder akustische Warnsignal denkbar, mit denen eine solche Warnsignalkaskade realisierbar ist.

Bezugszeichenliste

| | |
|---|---|
| 1 | Fahrzeug |
| 2 | Vorrichtung |
| 4 | Objekt |
| 6 | Sensoreinrichtung |
| 8 | Erfassungsbereich |
| 10 | Fahrzeugfront |
| 12 | Fronterfassungsbereich |
| 14 | Fahrzeugseite |
| 16 | Seitenerfassungsbereich |
| 18 | Heckerfassungsbereich |
| 20 | Fahrzeugheck |
| 22 | erster Sensor |
| 24 | Fahrerhaus |
| 26 | zweiter Sensor |
| 28 | Fahrzeugseite |
| 30 | Steuereinrichtung |
| 32 | Warneinrichtung |
| 34 | Längsmittelachse |
| 36 | Objekt-Trajektorie |
| 38, 38' | Fahrzeug-Trajektorie |
| 40 | Schnittpunkt |

**Patentansprüche**

**1.** Vorrichtung zum Warnen eines Fahrzeugführers eines Fahrzeugs (1) vor einem Objekt (4) beinhaltend wenigstens Folgendes:

a) Eine Sensoreinrichtung (6) mit einem Erfassungsbereich (8), wobei die Sensoreinrichtung (6) ein innerhalb des Erfassungsbereichs (8) stehendes oder sich bewegendes Objekt (4) erfassen kann,

b) eine mit der Sensoreinrichtung (6) zusammenwirkende Steuereinrichtung (30), welche ausgebildet ist, dass sie die Signale der Sensoreinrichtung (6) auf innerhalb des Erfassungsbereichs (8) stehende oder sich bewegende Objekte (4) auswertet und einen wenigstens abhängig von der Geschwindigkeit (v_ego) des Fahrzeugs (1) dynamisch veränderbaren Warnbereich (A_info) festlegt, welcher kleiner als der Erfassungsbereich (8) oder maximal so groß wie der Erfassungsbereich ist,

c) eine Warneinrichtung (32), welche von der Steuereinrichtung (30) derart angesteuert ist, dass sie zum Warnen des Fahrzeugführers ein Warnsignal erzeugt, wobei

d) die Warneinrichtung (32) ausgebildet ist, dass sie eine Kaskade von Warnsignalen abhängig von einem Gefahrenmaß der durch das erfasste Objekt (4) und/oder durch das Fahrzeug (1) hervorgerufenen Fahrsituation erzeugt, wobei

e) die Steuereinrichtung (30) weiterhin ausgebildet ist, dass sie bei einer Erfassung eines Objekts (4) innerhalb des Erfassungsbereichs (8), welches sich in Bezug zum Fahrzeug (1) seitlich versetzt entlang einer Objekt-Trajektorie (36) bewegt, einen Gefahrenbereich (A_hazard) festlegt, **dadurch gekennzeichnet, dass**

e1) die Festlegung des Gefahrenbereichs (A_hazard) auf der hypothetischen Situation basiert, dass das Fahrzeug (1) zu einem bestimmten Zeitpunkt (t0) in Richtung auf die Objekt-Trajektorie (36) abbiegt und es zwischen der dann fiktiven Fahrzeug-Trajektorie (38) und der Objekt-Trajektorie (36) zu einem fiktiven Schnittpunkt (40) kommt, und wobei

e2) der Gefahrenbereich (A_hazard) dreieckförmig ausgebildet ist, mit einem ersten, am Fahrzeug angeordneten Eckpunkt als Referenzpunkt (referenz_hazard), einem zweiten auf der Objekt-Trajektorie (36) angeordneten Eckpunkt (x_hazard_front) und einem dritten auf der Objekt-Trajektorie (36) angeordneten Eckpunkt (x_hazard_rear), wobei der zweite Eckpunkt (x_hazard_front) und der dritte Eckpunkt (x_hazard_rear) derart festgelegt werden, dass eine Kollision zwischen dem Objekt (4) und dem Fahrzeug (1) angenommen wird, wenn sich das Objekt (4) zu dem bestimmten Zeitpunkt (t0) auf der Verbindungslinie zwischen dem zweiten Eckpunkt (x_hazard_front) und dem dritten Eckpunkt (x_hazard_rear) auf der Objekt-Trajektorie (36) befindet und ansonsten nicht, und dass

f) die Steuereinrichtung (30) weiterhin ausgebildet ist, dass sie abhängig von einer Erfassung eines Objekts (4) innerhalb oder außerhalb des Warnbereichs (A_info) und innerhalb oder außerhalb des Gefahrenbereichs (A_hazard) ein vorliegendes Gefahrenmaß bestimmt und ein dem jeweiligen Gefahrenmaß entsprechendes Warnsignal innerhalb der Kaskade von Warnsignalen erzeugt.

2. Vorrichtung nach Anspruch 1, **dadurch gekennzeichnet, dass** die Steuereinrichtung (30) weiterhin ausgebildet ist, dass sie falls von der Sensoreinrichtung (6)

a1) außerhalb des Warnbereichs (A_info) und außerhalb des Gefahrenbereichs (A_hazard) aber innerhalb des Erfassungsbereichs (8) ein Objekt (4) erfasst wird, ein erstes Warnsignal oder kein Warnsignal erzeugt, oder

a2) innerhalb des Gefahrenbereichs (A_hazard) und außerhalb des Warnbereichs (A_info) oder innerhalb des Warnbereichs (A_info) und außerhalb des Gefahrbereichs ein Objekt (4) erfasst wird, ein zweites Warnsignal erzeugt wird, oder

a3) außerhalb des Warnbereichs (A_info) aber innerhalb des Gefahrenbereichs (A_hazard) ein Objekt (4) sowie ein relativ zueinander Bewegen des Fahrzeugs (1) und des Objekts (4) erfasst wird, oder innerhalb des Warnbereichs (A_info) und des Gefahrenbereichs (A_hazard) ein Objekt (4) sowie kein relativ zueinander Bewegen des Fahrzeugs (1) und des Objekts (4) erfasst wird, ein drittes Warnsignal erzeugt wird, oder

a4) innerhalb des Warnbereichs (A_info) und innerhalb des Gefahrenbereichs (A_hazard) ein Objekt (4) sowie ein relativ zueinander Bewegen des Fahrzeugs (1) und des Objekts (4) erfasst wird, ein viertes Warnsignal erzeugt wird, wobei

b) von dem ersten Warnsignal bis zum vierten Warnsignal das Gefahrenmaß ansteigt.

3. Vorrichtung nach Anspruch 1 oder 2, **dadurch gekennzeichnet, dass** die Steuereinrichtung weiterhin ausgebildet ist, dass sie den Gefahrenbereich zeitabhängig in Zeitschritten festlegt, wenigstens abhängig von der zu dem jeweiligen Zeitschritt aktuell vorliegenden Objekt-Trajektorie und/oder der Geschwindigkeit (v_ego) des Fahrzeugs.

**4.** Vorrichtung nach einem der Ansprüche 1 bis 3, **dadurch gekennzeichnet, dass** der erste Eckpunkt oder Referenzpunkt eine Stelle oder einen Bereich am Fahrzeug darstellt, an welcher wenigstens ein Sensor der Sensoreinrichtung angeordnet ist, durch welchen das Objekt erfasst wird.

**5.** Vorrichtung nach einem der Ansprüche 1 bis 4, **dadurch gekennzeichnet, dass** die Steuereinrichtung (30) ausgebildet ist, dass sie den zweiten Eckpunkt (x_hazard_front) und den dritten Eckpunkt (x_hazard_rear) wenigstens abhängig von einem kleinst möglicher Radius (r_min) festlegt, den das mit einer zu dem Zeitpunkt (t0) mit einer bestimmten Geschwindigkeit (v_ego) fahrende Fahrzeug 1 noch ohne Gefahr befahren kann, wenn es unter einer maximal möglichen Querbeschleunigung (a_max_lat) fiktiv in Richtung auf die Objekt-Trajektorie abbiegt.

**6.** Vorrichtung nach einem der Ansprüche 1 bis 5, **dadurch gekennzeichnet, dass** die Warnsignale optische Signale mit jeweils unterschiedlichen Farben und/oder akustische Signale mit jeweils unterschiedlichen Tönen und/oder Tonfolgen sind.

**7.** Vorrichtung nach einem der Ansprüche 1 bis 6, **dadurch gekennzeichnet, dass** die Steuereinrichtung den Erfassungsbereich derart festlegt, dass er sich wenigstens von einem vor einer Fahrzeugfront angeordneten Fronterfassungsbereich einschließlich des Fronterfassungsbereichs über einen seitlich von einer Fahrzeugseite angeordneten Seitenerfassungsbereich bis zu einem Heckerfassungsbereich vor einem Fahrzeugheck einschließlich des Heckerfassungsbereichs erstreckt.

**8.** Vorrichtung nach Anspruch 7, **dadurch gekennzeichnet, dass** der Warnbereich (A_info) innerhalb des Seitenerfassungsbereichs zwischen einem von Null verschiedenen Minimal-Warnbereich und einem Maximal-Warnbereich senkrecht zu einer Längsmittelachse des Fahrzeugs gesehen veränderbar ist.

**9.** Vorrichtung nach Anspruch 7 oder 8, **dadurch gekennzeichnet, dass** der Warnbereich (A_info) in Richtung der Längsmittelachse des Fahrzeugs innerhalb des Heckerfassungsbereichs und/oder innerhalb des Fronterfassungsbereichs dynamisch veränderbar ist.

**10.** Vorrichtung nach Anspruch einem der Ansprüche 7 bis 9, **dadurch gekennzeichnet, dass** die Steuereinrichtung ausgebildet ist, dass sie ein tatsächliches oder beabsichtigtes Abbiegen des Fahrzeugs repräsentierende Signale empfangen kann und den dynamisch veränderbaren Warnbereich quer zur Längsmittelachse des Fahrzeugs gesehen an der Fahrzeugseite innerhalb des Seitenerfassungsbereichs seitlich erweitert, zu welcher ein Abbiegen des Fahrzeugs hin tatsächlich vorliegt oder beabsichtigt ist.

**11.** Vorrichtung nach einem der Ansprüche 7 bis 10, **dadurch gekennzeichnet, dass** der Seitenerfassungsbereich des Erfassungsbereichs seitlich von der Fahrzeugseite angeordnet ist, welche die von einem Fahrersitz des Fahrzeugs abgewandte Fahrzeugseite darstellt.

**12.** Vorrichtung nach einem der Ansprüche 7 bis 10, **dadurch gekennzeichnet, dass** der Seitenerfassungsbereich des Erfassungsbereichs seitlich von der Fahrzeugseite angeordnet ist, welche die dem Fahrersitz des Fahrzeugs zugewandte Fahrzeugseite darstellt.

**13.** Fahrzeug mit einer Vorrichtung nach einem der vorhergehenden Ansprüche.

**Claims**

**1.** Device for warning a driver of a vehicle (1) about an object (4) comprising at least the following:

a) a sensor device (6) with a detection area (8), wherein the sensor device (6) can detect an object (4) standing or moving within the detection area (8),
b) a control device (30) cooperating with the sensor device (6) which is configured to evaluate the signals from the sensor device (6) for objects (4) standing or moving within the detection area (8) and define a warning area (A_info) which is dynamically variable at least as a function of the speed (v_ego) of the vehicle (1), which warning area is smaller than the detection area (8) or at most as large as the detection area,
c) a warning device (32), which is actuated by the control device (30) such that it generates a warning signal for warning the driver of the vehicle, wherein
d) the warning device (32) is configured to generate a cascade of warning signals as a function of a hazard level of the driving situation created by the detected object (4) and/or by the vehicle (1), wherein

e) the control device (30) is further configured to determine a hazard area (A_hazard) on the detection of an object (4) within the detection area (8) which is moving laterally offset with respect to the vehicle (1) along an object trajectory (36), **characterised in that**

e1) the determination of the hazard area (A_hazard) is based on the hypothetical situation that the vehicle (1) will turn off at a specific time point (t0) in the direction of the object-trajectory (36) and there will be a fictitious intersection (40) between the then fictitious vehicle trajectory (38) and the object trajectory (36), and wherein

e2) the hazard area (A_hazard) is triangular, with a first corner point arranged on the vehicle as a reference point (reference_hazard), a second corner point (x_hazard_front) arranged on the object trajectory (36) and a third corner point (x_hazard_rear) arranged on the object trajectory (36), wherein the second corner point (x_hazard_front) and the third corner point (x_hazard_rear) are determined such that a collision between the object (4) and the vehicle (1) is assumed if the object (4) is located on the connecting line between the second corner point (x_hazard_front) and the third corner point (x_hazard_rear) on the object trajectory (36) at the specified time point (tO), and otherwise not, and **in that**

f) the control device (30) is further configured such that depending on the detection of an object (4) within or outside the warning area (A_info) and within or outside the hazard area (A_hazard) it determines a current hazard level and generates a warning signal corresponding to the respective hazard level within the cascade of warning signals.

2. Device according to claim 1, **characterised in that** the control device (30) is further configured, in the event that an object (4) is detected by the sensor device (6)

a1) outside the warning area (A_info) and outside the hazard area (A_hazard) but within the detection area (8), to generate a first warning signal or no warning signal, or

a2) if an object (4) is detected within the hazard area (A_hazard) and outside the warning area (A_info) or within the warning area (A_info) and outside the hazard area, to generate a second warning signal, or

a3) if an object (4) is detected outside the warning area (A_Info) but within the hazard area (A_hazard) and a relative movement is detected between the vehicle (1) and the object (4) or an object (4) is detected within the warning area (A_info) and the hazard area (A_hazard) and no relative movement is detected between the vehicle (1) and the object (4), to generate a third warning signal, or

a4) if an object (4) is detected within the warning area (A_Info) and within the hazard area (A_hazard) and a relative movement is detected between the vehicle (1) and the object (4), to generate a fourth warning signal, wherein

b) the hazard level increases from the first warning signal to the fourth warning signal.

3. Device according to claim 1 or 2, **characterised in that** the control device is further configured to determine the hazard area in time-dependent steps, at least as a function of the object trajectory currently present at the respective time step and/or the speed (v_ego) of the vehicle.

4. Device according to any one of claims 1 to 3, **characterised in that** the first corner point or reference point represents a point or a region on the vehicle at which at least one sensor of the sensor device is arranged, by which the object is detected.

5. Device according to any one of claims 1 to 4, **characterised in that** the control device (30) is configured to determine the second corner point (x_hazard_front) and the third corner point (x_hazard_rear) at least as a function of a smallest possible radius (r_min), which the vehicle 1 travelling at a specific speed (v_ego) at the time point (tO) can still travel without danger if it fictitiously turns off in the direction of the object trajectory at a maximum possible lateral acceleration (a_max_lat).

6. Device according to any one of claims 1 to 5, **characterised in that** the warning signals are optical signals each having different colours and/or acoustic signals each having different tones and/or tone sequences.

7. Device according to any one of claims 1 to 6, **characterised in that** the control device defines the detection area such that it extends at least from a front detection area located in front of a vehicle front including the front detection area, through a side detection area lateral to a vehicle side, to a rear detection area in front of a vehicle rear including the rear detection area.

8. Device according to claim 7, **characterised in that** the warning area (A_info) within the side detection area can vary between a non-zero minimum warning area and a maximum warning area, as viewed perpendicular to a longitudinal central axis of the vehicle.

9. Device according to claim 7 or 8, **characterised in that** the warning area (A_info) is dynamically variable in the direction of the longitudinal central axis of the vehicle within the rear detection area and/or within the front detection area.

10. Device according to any one of claims 7 to 9, **characterised in that** the control device is configured such that it can receive signals representing an actual or intended turning off of the vehicle and laterally extends the dynamically variable warning area, as viewed transversely to the longitudinal central axis of the vehicle at the side of the vehicle within the side detection area, to which the vehicle actually turns off or intends to.

11. Device according to any one of claims 7 to 10, **characterised in that** the side detection area of the detection area is arranged laterally from the vehicle side which is the vehicle side facing away from a driver's seat of the vehicle.

12. Device according to any one of claims 7 to 10, **characterised in that** the side detection area of the detection area is arranged laterally from the vehicle side which is the vehicle side facing the driver's seat of the vehicle.

13. Vehicle with a device according to any one of the preceding claims.


**Revendications**

1. Dispositif pour avertir un conducteur d'un véhicule (1) de la présence d'un objet (4), contenant au moins les éléments suivants :

   a) un dispositif de détection (6) présentant une zone de détection (8), dans lequel le dispositif de détection (6) peut détecter un objet (4) immobile ou en mouvement à l'intérieur de la zone de détection (8),
   b) un dispositif de commande (30) coopérant avec le dispositif de détection (6), qui est conçu pour analyser les signaux du dispositif de détection (6) sur des objets (4) immobiles ou en mouvement à l'intérieur de la zone de détection (8) et définir une zone d'avertissement (A_info) modifiable dynamiquement au moins en fonction de la vitesse (v_ego) du véhicule (1), laquelle zone est plus petite que la zone de détection (8) ou au maximum aussi grande que la zone de détection,
   c) un dispositif d'avertissement (32) qui est commandé par le dispositif de commande (30) de manière à générer un signal d'avertissement pour avertir le conducteur de véhicule, dans lequel
   d) le dispositif d'avertissement (32) est conçu pour générer une cascade de signaux d'avertissement en fonction d'un niveau de danger de la situation de conduite provoquée par l'objet (4) détecté et/ou par le véhicule (1), dans lequel
   e) le dispositif de commande (30) est en outre conçu pour déterminer une zone de danger (A_hazard) en cas de détection d'un objet (4) à l'intérieur de la zone de détection (8), lequel se déplace le long d'une trajectoire d'objet (36) de manière décalée latéralement par rapport au véhicule (1), **caractérisé en ce que**

      e1) la détermination de la zone de danger (A_hazard) est basée sur la situation hypothétique selon laquelle le véhicule (1) tourne à un instant donné (t0) en direction de la trajectoire d'objet (36) et il en résulte un point d'intersection fictif (40) entre la trajectoire de véhicule (38) alors fictive et la trajectoire d'objet (36), et dans lequel
      e2) la zone de danger (A_hazard) est conçue de manière triangulaire, avec un premier sommet disposé sur le véhicule en tant que point de référence (referenz_hazard), un deuxième sommet (x_hazard_front) disposé sur la trajectoire d'objet (36) et un troisième sommet (x_hazard_rear) disposé sur la trajectoire d'objet (36), dans lequel le deuxième sommet (x_hazard_front) et le troisième sommet (x_hazard_rear) sont déterminés de telle sorte qu'une collision entre l'objet (4) et le véhicule (1) est supposée si l'objet (4) se trouve à l'instant donné (tO) sur la ligne de jonction entre le deuxième sommet (x_hazard_front) et le troisième sommet (x_hazard_rear) sur la trajectoire d'objet (36) et non autrement, et que

   f) le dispositif de commande (30) est en outre conçu pour déterminer un niveau de danger présent en fonction d'une détection d'un objet (4) à l'intérieur ou à l'extérieur de la zone d'avertissement (A_info) et à l'intérieur ou à l'extérieur de la zone de danger (A_hazard) et générer un signal d'avertissement correspondant au niveau de danger respectif dans la cascade de signaux d'avertissement.

2. Dispositif selon la revendication 1, **caractérisé en ce que** le dispositif de commande (30) est en outre conçu pour, si le dispositif de détection (6)

a1) détecte un objet (4) en dehors de la zone d'avertissement (A_info) et en dehors de la zone de danger (A_hazard) mais à l'intérieur de la zone de détection (8), générer un premier signal d'avertissement ou aucun signal d'avertissement, ou

a2) détecte un objet (4) à l'intérieur de la zone de danger (A_hazard) et à l'extérieur de la zone d'avertissement (A_info) ou à l'intérieur de la zone d'avertissement (A_info) et à l'extérieur de la zone de danger, générer un deuxième signal d'avertissement, ou

a3) détecte un objet (4) et un déplacement du véhicule (1) et de l'objet (4) l'un par rapport à l'autre en dehors de la zone d'avertissement (A_info) mais à l'intérieur de la zone de danger (A_hazard), ou détecte un objet (4) et aucun déplacement du véhicule (1) et de l'objet (4) l'un par rapport à l'autre à l'intérieur de la zone d'avertissement (A_info) et de la zone de danger (A_hazard), générer un troisième signal d'avertissement, ou

a4) détecte un objet (4) et un déplacement du véhicule (1) et de l'objet (4) l'un par rapport à l'autre à l'intérieur de la zone d'avertissement (A_info) et à l'intérieur de la zone de danger (A_hazard), générer un quatrième signal d'avertissement, dans lequel

b) le niveau de danger augmente du premier signal d'avertissement au quatrième signal d'avertissement.

3. Dispositif selon la revendication 1 ou 2, **caractérisé en ce que** le dispositif de commande est en outre conçu pour déterminer la zone de danger en fonction du temps par étapes temporelles, au moins en fonction de la trajectoire d'objet actuellement présente à l'étape temporelle respective et/ou de la vitesse (v_ego) du véhicule.

4. Dispositif selon l'une quelconque des revendications 1 à 3, **caractérisé en ce que** le premier sommet ou point de référence représente un emplacement ou une zone du véhicule où est disposé au moins un capteur du dispositif de détection, par lequel l'objet est détecté.

5. Dispositif selon l'une quelconque des revendications 1 à 4, **caractérisé en ce que** le dispositif de commande (30) est conçu pour déterminer le deuxième sommet (x_hazard_front) et le troisième sommet (x_hazard_rear) au moins en fonction d'un rayon le plus petit possible (r_min) que le véhicule (1) roulant à une vitesse donnée (v_ego) à l'instant (tO) peut encore parcourir sans danger lorsqu'il tourne de manière fictive en direction de la trajectoire d'objet avec une accélération transversale maximale possible (a_max_lat).

6. Dispositif selon l'une quelconque des revendications 1 à 5, **caractérisé en ce que** les signaux d'avertissement sont des signaux optiques avec des couleurs respectivement différentes et/ou des signaux acoustiques avec des sons et/ou suites de sons respectivement différents.

7. Dispositif selon l'une quelconque des revendications 1 à 6, **caractérisé en ce que** le dispositif de commande détermine la zone de détection de manière à ce qu'elle s'étende au moins d'une zone de détection avant disposée devant un avant de véhicule incluant la zone de détection avant, à une zone de détection arrière disposée devant un arrière de véhicule incluant la zone de détection arrière, en passant par une zone de détection latérale disposée latéralement par rapport à un côté de véhicule.

8. Dispositif selon la revendication 7, **caractérisé en ce que** la zone d'avertissement (A_info) à l'intérieur de la zone de détection latérale est modifiable entre une zone d'avertissement minimale non nulle et une zone d'avertissement maximale, vu de manière perpendiculaire à un axe central longitudinal du véhicule.

9. Dispositif selon la revendication 7 ou 8, **caractérisé en ce que** la zone d'avertissement (A_info) est modifiable dynamiquement dans la direction de l'axe central longitudinal du véhicule à l'intérieur de la zone de détection arrière et/ou à l'intérieur de la zone de détection avant.

10. Dispositif selon l'une quelconque des revendications 7 à 9, **caractérisé en ce que** le dispositif de commande est conçu pour pouvoir recevoir des signaux représentant un virage effectif ou envisagé du véhicule et pour étendre latéralement la zone d'avertissement modifiable dynamiquement, vu de manière transversale à l'axe central longitudinal du véhicule, sur le côté de véhicule à l'intérieur de la zone de détection latérale vers lequel un virage du véhicule est bien effectué ou est envisagé.

11. Dispositif selon l'une quelconque des revendications 7 à 10, **caractérisé en ce que** la zone de détection latérale de la zone de détection est disposée latéralement par rapport au côté de véhicule qui représente le côté de véhicule opposé à un siège de conducteur du véhicule.

12. Dispositif selon l'une quelconque des revendications 7 à 10, **caractérisé en ce que** la zone de détection latérale de la zone de détection est disposée latéralement par rapport au côté de véhicule qui représente le côté de véhicule tourné vers le siège de conducteur du véhicule.

13. Véhicule équipé d'un dispositif selon l'une quelconque des revendications précédentes.

FIG.1

FIG.2

FIG.3

FIG.4

FIG.5

FIG.6

FIG.7

FIG.8

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009041555 A1
- DE 102009041556 A1
- DE 102011116822 A1
- US 20090009306 A1
- DE 19654691 A1